# EUROPÄISCHE PATENTSCHRIFT

(11) **EP 0 686 517 B1**
(45) Veröffentlichungstag und Bekanntmachung des Hinweises auf die Patenterteilung: **09.09.1998**
(21) Anmeldenummer: 95108217.1
(22) Anmeldetag: 30.05.1995
(51) Int. Cl.: B60C 11/03, B60C 11/00, B60C 19/00

(54) **Fahrzeugluftreifen mit symmetrischem Unterbau und asymmetrischer Lauffläche**
Vehicle tyre with symmetrical reinforcing structure and asymmetrical tread
Bandage pneumatique pour véhicule, comprenant une armature symétrique et un profil asymétrique

(30) Priorität: 10.06.1994 DE 4420316
(43) Veröffentlichungstag der Anmeldung: 13.12.1995
(73) Patentinhaber: Continental Aktiengesellschaft, 30165 Hannover (DE)
(72) Erfinder: Meyer-Adlung, Jobst, D-30171 Hannover (DE); Spitz, Wolfgang, D-30455 Hannover (DE); Rohde, Dieter, D-31275 Lehrte (DE); Praetorius, Siegfried, D-30890 Barsinghausen (DE); Hartmann, Klaus-Heiner, D-31535 Neustadt (DE)

(56) Entgegenhaltungen:
- EP-A- 0 071 809
- EP-A- 0 200 179
- EP-A- 0 307 340
- EP-A- 0 593 288
- DE-A- 2 263 455
- FR-A- 2 403 901
- PATENT ABSTRACTS OF JAPAN vol. 015 no. 290 (M-1139) ,23.Juli 1991 & JP-A-03 104707 (YOKOHAMA RUBBER CO LTD:THE) 1.Mai 1991,

## Beschreibung

Die Erfindung bezieht sich auf einen Fahrzeugluftreifen gemäß dem Obergegriff des Patentanspruches 1. Er weist ein symmetrisches Paket von Gürtellagen auf einer symmetrischen Karkasse mit im wesentlichen radialen Stahl- und/oder Aramid-Drahtverlauf auf. Darauf ist eine - gegebenenfalls radial in Cap und Base unterteilte - asymmetrische Lauffläche mit mindestens drei Längsrillen einer Tiefe zwischen 12 und 18 mm angeordnet. Solche Reifen dienen insbesondere zur Verwendung auf der vorderen und/oder hinteren Achse von ungelenkten Mehrachsaggregaten, wie sie an Lkw-Anhängern und vor allem Sattelaufliegern häufig zu finden sind.

Mehrachsaggregate sind sowohl bei Anhängern als auch bei Sattelaufliegern meistens ungelenkt, zum einen wegen der zusätzlichen Anschaffungskosten für eine Lenkung der vorderen und/oder Achse(n) und zum anderen wegen dem zusätzlichen Gewicht einer solchen Lenkkinematik, welches angesichts vom Gesetz- und Verordnungsgeber festgelegter höchstzulässiger Achslasten zwangsläufig die verbleibende Nutzlast verringert.

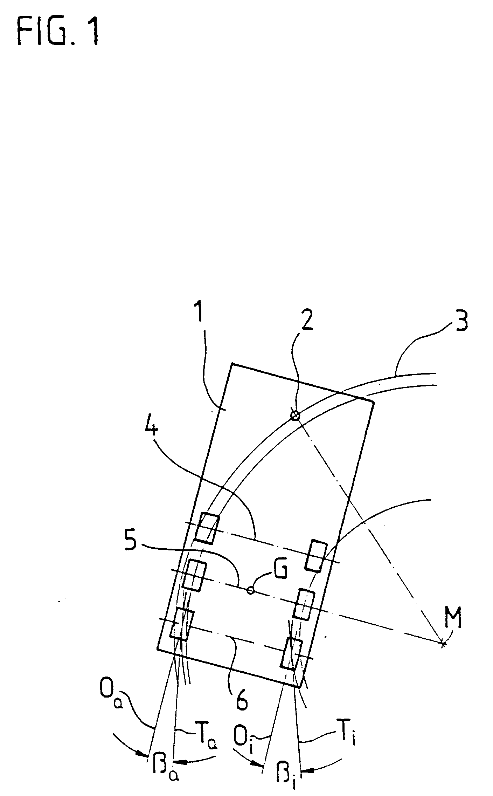

Dieses Problem wird anhand der Figur 1 erläutert. Sie zeigt schematisch einen dreiachsigen Sattelauflieger 1, dessen Kupplungspunkt 2 durch einen nicht dargestellten Sattelschlepper auf einer Kreisbahn 3 um einen Mittelpunkt M geführt wird.

Bei quasistatischer Betrachtung sucht sich das die drei ungelenkten Achsen 4, 5 und 6 umfassende Achaggregat eine - engere - Kreisbahn um den Punkt M, wobei eine Axiale durch den Lastmittelpunkt G des Achsaggregates durch den Kreisbahnmittelpunkt M geht. Die Lage von G hängt ab von der Achslastverteilung und den Achsabständen. Sind die Achsabstände zwischen vorderer und innerer und zwischen innerer und hinterer Achse gleich und stimmen die Achslasten überein, so liegt G genau auf der inneren Achse. Dieser Fall ist hier gezeigt. In diesem typischen Fall laufen die beiden Räder der inneren Achse 5 exakt tangential auf einer Kreisbahn um M.

Die vordere Achse 4 und die hintere Achse 6 hingegen können infolge der fehlenden Lenkung keine exakt tangentiale Bahn einnehmen, vielmehr ergibt sich ein Differenzwinkel βᵢ zwischen der Tangente Tᵢ an die Kreisbahn des kurveninneren Rades und der Umfgangsrichtung dieses Rades, also ein Zwangsschlupf. Analoges gilt für das kurvenäußere Rad, wo die entsprechenden Größen mit dem Index a statt i bezeichnet sind.

Wird die gleiche Kupplungs-Kurvenbahn dynamisch betrachtet, so treten über der Geschwindigkeit quadratisch anwachsende Fliehkräfte hinzu, denen durch entsprechende Zentripetalkräfte das Gleichgewicht gehalten werden muß; damit das Hinterachsaggregat eine resultierende Querkraft aufnehmen kann, benötigt es entsprechend dem Schräglaufwinkel-Querkraftdiagramm der Reifen einen resultierenden Schräglaufwinkel, der sich den zuvor quasistatisch untersuchten Winkelverhältnissen überlagert. Also übernimmt auch die mittlere Achse einen - wenn auch betragsmäßig kleineren - Schräglaufwinkel gegenüber der Kurvenbahn an.

Dieser zur Aufbringung einer Zentripetalkraft erforderliche Schräglaufwinkel an der mittleren Achse ist in der Richtung orientiert wie der zuvor quasistatisch betrachtete Schräglaufwinkel der hinteren Achse 6. Das Erfordernis, den Zentrifugalkräften das Gleichgewicht zu halten, führt also zu einer weiteren betragsmäßigen Vergrößerung des Schräglaufwinkels an der hinteren Achse 6, dem Aufbau eines gewissen, gleich orientierten Schräglaufwinkels an der mittleren Achse und einem Abbau des quasistatisch bestimmten, zentrifugal wirkenden Schräglaufwinkels (und bei extremen Fliehkräften im Verhältnis zur Bahnkrümmung schließlich einer Orientierungsumkehr zu zentripetal hin) an der vorderen Achse 4.

Diese dynamische Betrachtung zeigt, daß an ungelenkten Mehrachsaggregaten die höchste Querkraftbeanspruchung an der hinteren Achse auftritt; dementsprechend ist dort der Verschleiß am größten. An Dreiachsaggregaten sind in der Praxis Laufleistungen bauartgleicher Reifen auf der hinteren Achse von 80.000, auf der vorderen Achse von 120.000 und auf der inneren Achse von 300.000 km geläufig.

Es ist von PKW-Reifen her bekannt, das Kurvenverhalten durch eine asymmetrische Laufflächengestaltung zu verbessern, wobei ein vergrößerter Positivanteil an der fahrzeugäußeren Seite bereit gehalten wird. Beispiele einer solchen Gestaltung finden sich im deutschen Geschmacksmuster M 91 01 356.9 und in der Werbung aus der Zeitschrift "Gummibereifung", 09/88, Seite 21. Diese bekannten Reifenausführungen sind aber nicht für Nutzfahrzeuge geeignet und verfolgen ein anderes Ziel, nämlich die maximal mögliche Querbeschleunigung zu erhöhen.

Ferner sind - mit der Anmelderin unbekanntem Erfolg - in der EP-PS 0 307 340 Flugzeugreifen vorgeschlagen worden, wo auf symmetrischem Unterbau nur eine der beiden Laufflächenhälften profiliert ist. Solche Reifen brauchen aber nur auf eine Laufleistung von etwa 3.000 km ausgelegt zu sein und sind für etwa um den Faktor 3 höhere Geschwindigkeiten ausgelegt.

Es verbleibt die Aufgabe, die Lebensdauer gattungsgemäßer Fahrzeugluftreifen zu erhöhen, insbesondere der Reifen für Sattelauflieger oder Anhänger mit ungelenkten Mehrachsaggregaten, insbesondere auf der hinteren Achse.

Die Aufgabe wird erfindungsgemäß dadurch gelöst, daß
a) axial außen ein besonders breiter Profilsteg angeordnet ist, wobei die zwischen der fahrzeugäußeren Längsrille und dem fahrzeugäußeren Aufstandsflächenrand auf halber Profiltiefe zu messende Breite 25 % bis 40 % der Aufstandsflächenbreite betragt,
b) der axial äußere Profilsteg frei ist von jeglichen Negativen, die eine Haupterstreckungsrichtung haben (also keine Längsrillen, keine Längseinschnitte, keine Querrillen, keine Quereinschnitte, keine Diagonalrillen, keine Diagonaleinschnitte, all dies auch nicht mit irgendeiner Wellung),
c) in dem axial äußeren Profilsteg Negative angeordnet sind, die in der Draufsicht im wesentlichen rund sind, wobei bis zu vier Spuren von Negativen auf dem axial äußeren Profilsteg angeordnet sind und jede Spur zwischen 100 und 150 im wesentlichen runder Negative enthält.

Durch den axial äußeren, besonders breiten Profilsteg, der bislang nur für einige Hochgeschwindigkeits-Pkw-Reifen vorgeschlagen wurde, wird erreicht, daß selbst bei Konstanthaltung des Abriebvolumens pro Fahrtstrecke in diesem Laufflächenbereich die Profiltiefenabnahme pro Fahrtstrecke verringert wird. Tatsächlich nimmt infolge der durch die Erfindung verringerten Flächenpressung im fahrzeugäußeren Laufflächenbereich das Abriebvolumen pro Fahrtstrecke etwas ab, was die durch die Erfindung erzielte Abnahme der Profiltiefe pro Fahrtstrecke im fahrzeugäußeren Laufflächenbereich noch verstärkt.

Vorzugsweise beträgt die Breite des axial äußeren Profilsteges 30 % bis 38 % der Aufstandsflächenbreite. Nach den bisherigen Versuchen auf Trommelprüfständen scheint der gleichmäßigste Abrieb unter den die Praxis simulierenden Schräglaufwinkel zwischen 35 % und 36 % erreicht zu werden.

Die weitere Maßnahme, daß nämlich der axial äußere Profilsteg frei ist von jeglichen Negativen, die eine Haupterstreckungsrichtung haben, also frei ist von Längsrillen, Querrillen, Längseinschnitten, Quereinschnitten, Diagonalrillen und -einschnitten vergrößert nur unwesentlich den Positivanteil und dient insbesondere der Unterbindung einer Rißentstehung bzw. -fortpflanzung. Insbesondere der Verzicht auf Längseinschnitte bedeutet, die Spannungskonzentrationen infolge Querausbiegung der Positive im Profilgrund entscheidend zu mildern. Diese Spannungen sind beim Nutzfahrzeugreifen recht genau um den Faktor 10 größer als beim Hochgeschwindigkeits-Pkw-Reifen wegen des etwa um den Faktor 4,4 höheren Luftdruckes (der in erster Näherung der Flächenpressung in der Bodenaufstandsfläche entspricht), der etwa um den Faktor 2,1 größeren Profiltiefe (längerer Hebelarm!) und der größeren Gummihärte.

Die Anordnung von in der Draufsicht im wesentlichen runder Negative (in der Fachsprache wegen mangelnder Verbindung zu den Längsrillen auch als "Sacklöcher" bezeichnet) im axial äußeren, einschnittfreien Profilsteg erhält die notwendige Rutschsicherheit auch auf nassen Straßen aufrecht bei geringstmöglicher Kerbwirkung und drosselt den Kautschukfluß in Umfangsrichtung beim Schließen der Vulkanisationsform.

Vorzugsweise ist sowohl der fahrzeugäußere Rand des äußeren Profilsteges als auch der andere Rand des Profilsteges unterbrechungsfrei und sie verlaufen beide exakt in Umfangsrichtung. Dieses Merkmal dient neben der Verringerung von Kerbwirkungen insbesondere der Minimierung der Amplituden von Schwingungserregungen im Ein- und Auslauf des Latsches. Trotz der Massivität des äußeren Profilsteges, die eine erhöhte Steifigkeit desselben in der Umfangsebene und dadurch eine Erhöhung der Ermüdungsempfindlichkeit bei Dauerschwingungen bewirkt, werden so schwingungsbedingte Risse vermieden.

Die erfindungsgemäße Laufflächengestaltung empfiehlt sich besonders zur Anordnung auf einem bereits von der Anmelderin veröffentlichten Unterbau, bei dem die Breite zumindest der breitesten Gürtellage um mindestens 10 % größer ist als die Breite der Lauffläche und wobei zudem der Übergang von den axialen Rändern der Lauffläche in die Seitenwand als Kehle gestaltet ist mit einem Kehlenradius kleiner 60 mm. Solche Reifen, für die die Anmelderin das geschützte Warenzeichen EOT benutzt, ermöglichen einen geringeren Rollwiderstand durch eine Verringerung des zu walkenden Laufflächenvolumens und vor allem durch Verringerung der Walkleistungskonzentration in dem Übergangsbereich Lauffläche/Seitenwand.

EOT-Reifen werden üblicherweise mit dem gleichen Luftdruck betrieben wie konventionelle Nutzfahrzeugreifen (8 bar Überdruck), sodaß bei gleicher Achslast die Lauffläche sich zu einer Bodenaufstandsfläche gleichen Flächeninhaltes abplattet, wobei die Längsabmessungen entsprechend der Abnahme der Querabmessungen größer sind. Infolgedessen erfolgen der Latschein- und -auslauf mit größeren Radialbeschleunigungen auf einem größeren Abstand vom Aufstandsflächenmittelpunkt, was die Empfindlichkeit gegenüber Reifendrehungen um die Hochachse erhöht. Diese Problemverschärfung wirkt - wegen des größten Abstandes zum Laufflächenmittelpunkt - in den Laufflächenrändern besonders deutlich, insbesondere am fahrzeugäußeren. Mit den erfindungsgemäßen Merkmalen werden die Laufflächenränder den erhöhten Anforderungen der EOT-Unterbauten gerecht.

Erfindungsgemäße Reifen - unabhängig davon ob mit oder ohne EOT-Unterbau - verbessern ihr Abriebverhalten noch weiter, wenn die Lauffläche aus mindestens zwei hinsichtlich ihres Werkstoffes verschiedenen, axial nebeneinander angeordneten Streifen zusammengesetzt ist, wobei der axial äußerste Streifen gemäß DIN 53516 höchstens 70 % des Abriebvolumens zeigt wie der übrige Bereich der Lauffläche.

Dem Fachmann sind mehrere Maßnahmen zur Senkung des Abriebvolumens über der Zeit geläufig. Eine dieser Maßnahmen ist die Erhöhung der Härte. Sie ist durch eine erhöhte Vernetzungsstellendichte erreichbar, was mit einer erhöhten Schwefeldosierung zusammen mit entsprechenden Anpassungen in der Beschleunigerdosierung möglich ist. Hiermit ginge eine Senkung des Reibungsbeiwertes gegenüber Asphalt einher, die in engen Grenzen toleriert werden kann, insbesondere dann, wenn zur Erhaltung der Bremsleistung die Anzahl der Quereinschnitte und/oder der Reibungsbeiwert im fahrzeuginneren und -mittleren Bereich der Reifenlauffläche wird.

Eine kleine Reibwertabsenkung in axialer Richtung vergrößert überdies den abriebmindernden Effekt, weil dadurch in den besonders abriebgefährdeten fahrzeugäußeren Zonen die anfallende Reibleistung vermindert wird, freilich unter Inkaufnahme einer erhöhten Reibleistung in den übrigen Zonen, bzw. auf der inneren Achse.

Der Abriebwiderstand kann auch durch andere Füllstofftypen und/oder andere Füllstoffdosierung erhöht werden. Dem Fachmann ist bekannt, daß es dabei - auch wenn eine Erhöhung der Härte einhergeht - nicht zu einem Abfall des Reibungsbeiwertes kommen muß. Dem Fachmann ist ferner bekannt, daß, insoweit eine erhöhte Hysteresis verwendet wird, sich diese Erhöhung nur in dem für den Reibungsbeiwert entscheidenden hohen Frequenzbereich zeigen sollte, nicht aber in dem für den Rollwiderstand entscheidenden niedrigeren Frequenzbereich, um eine Erhöhung des Energieverbrauches sowie eine Erhöhung der Laufflächentemperatur und eine ansonsten einhergehende Minderung der Runderneuerungsfähigkeit zu vermeiden. Dem Fachmann ist insbesondere bekannt, daß das Frequenzband hoher Hysteresis nach oben verschoben wird bei Verkleinerung der Molekülgröße der Füllstoffe und/oder Polymere.

Weiterhin ist dem Fachmann bekannt, daß der Abriebwiderstand durch eine Erhöhung des Anteiles von Butadien (BR) und/oder Styrolbutadien (SBR) zulasten des Naturkautschukanteiles (NR) erhöht werden kann. Zur Kompensation größerer Rißanfälligkeit über steigendem Styrolkautschukanteil ist es dann besonders wichtig, beide Ränder des äußeren Profilsteges knickfrei zu gestalten, also allenfalls sanft gewellt, vorzugsweise gerade.

Diese bevorzugte Weiterbildung der Erfindung bedingt eine Werkstoffgrenze im Laufflächenbereich, an der sich Spannungen konzentrieren können. Um ein Werkstoffversagen an diesen Stellen auszuschließen, wird vorgeschlagen, die Grenze zwischen den beiden verschieden abriebfesten Streifen im Mittenbereich der angrenzenden Längsrille anzuordnen, wobei dieser Mittenbereich als der symmetrisch um die Rillenmittellinie liegende Bereich mit einer Breite von 60 % der Rillenweite in halber Profiltiefe definiert ist.

Die Erfindung wird nachfolgend anhand von vier Figuren näher erläutert. Es zeigt
- Fig. 2: einen Querschnitt durch einen erfindungsgemäßen Fahrzeugreifen mit einem axial geteilten Zweistoff-Laufstreifen,
- Fig. 3: einen Querschnitt durch einen erfindungsgemäßen Fahrzeugreifen mit einem axial ungeteilten Laufstreifen,
- Fig. 4: eine Draufsicht auf einen Umfangsabschnitt eines erfindungsgemäßen Fahrzeugreifens und
- Fig. 5: einen Querschnitt durch einen erfindungsgemäßen Fahrzeugreifen mit einem diagonal geteilten Laufstreifen.

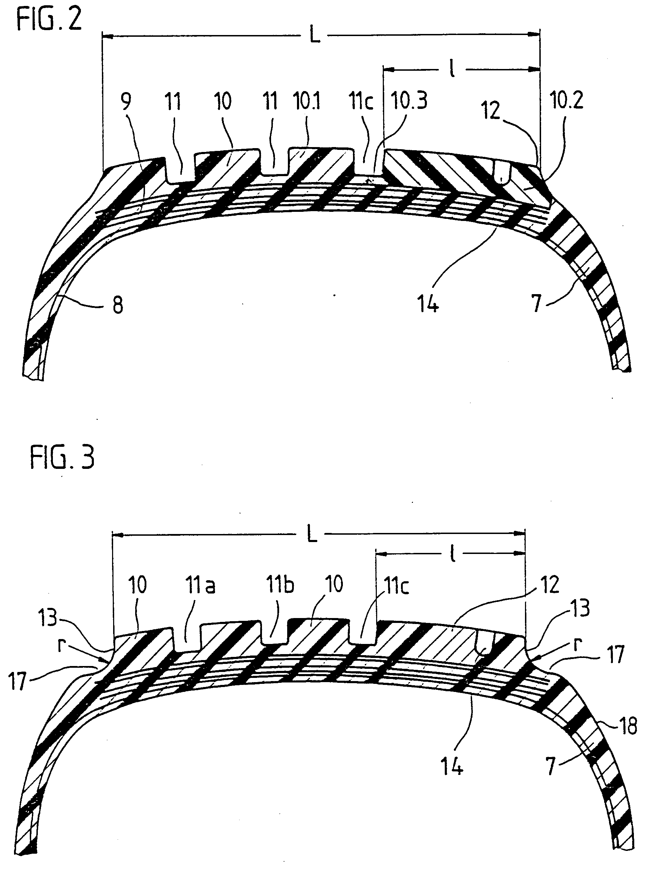

Figur 2 zeigt einen Querschnitt durch einen erfindungsgemäßen Fahrzeugreifen 7 mit einem axial geteilten Zweistoff-Laufstreifen. Oberhalb der Karkasse 8 aus Stahldraht-Cord befinden sich vier ebenfalls aus Stahldraht-Cord bestehende Gürtellagen 9 und darüber ein Laufstreifen 10.

Wesentliches Merkmal der Erfindung ist die besonders große Breite l eines der beiden äußeren Profilstege, der hier mit dem Bezugszeichen 12 markiert ist. Die Breite l dieses Profilsteges 12 beträgt in diesem Ausführungsbeispiel 35 % der Breite L des gesamten Laufstreifens 10. Dieser Reifen 7 wird so montiert, daß sich der breite Streifen 12 auf der fahrzeugäußeren Seite befindet.

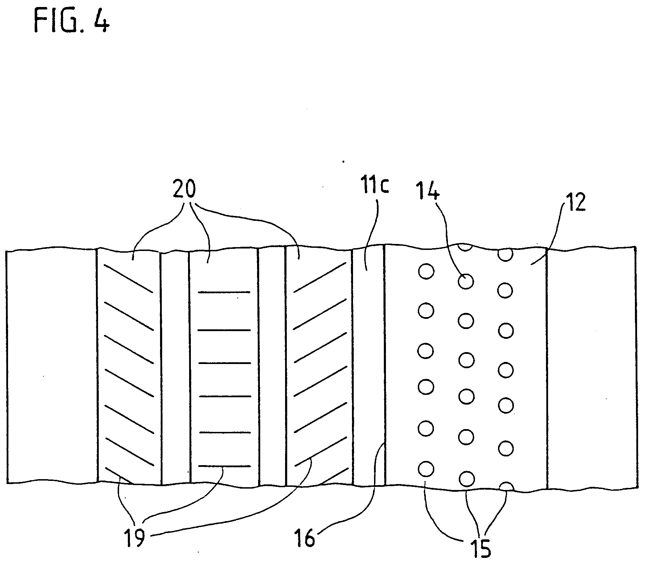

Innerhalb des breiten Profilsteges 12 sind nur solche Negative 14 angeordnet, die keine Haupterstreckungsrichtung in der (tatsächlich natürlich entsprechend der Reifenwölbung leicht gekrümmten) Ebene haben, die durch die Umfangsrichtung und die axiale Richtung aufgespannt wird. Die Negative 14 sind also in dieser Ebene - wie Figur 4 deutlich zeigt - im wesentlichen rund. Die Tiefe dieser Negative 14 stimmt etwa mit der Tiefe der drei Längsrillen 11 überein. Im Grunde dieser Negative 14 sind jeweils ein Steinabweiser angeordnet, die hier nicht weiter dargestellt sind, da dem Fachmann aus dem Stand der Technik genügend Gestaltungsvorschläge hierfür bekannt sind.

Diese Negative 14 im äußeren Profilsteg 12 sind in diesem Beispiel in drei zueinander phasenversetzten Spuren 15 angeordnet (siehe auch Figur 4). Auf diese Weise werden Spannungskonzentrationen an den Negativwandungen infolge der Wölbungsänderungen beim Ein- und Auslauf in den Latsch weitgehend vermieden.

Der Laufstreifen 10 ist entsprechend einer bevorzugten Ausführung der Erfindung in einen fahrzeuginneren Streifen 10.1 und einen fahrzeugäußeren Streifen 10.2 aufgeteilt. Der fahrzeugäußere Streifen 10.2 weist wie bevorzugt höchstens 70 % des gemäß DIN 53516 zu messenden Abriebvolumens auf im Vergleich zum fahrzeuginneren Streifen 10.1.

Natürlich können beide Streifen 10.1 und 10.2 - wie an sich bekannt - auch in der Radialen unterteilt sein, wobei die innere Schicht dann als Base und die äußere als Cap bezeichnet wird. In solchem Falle ist die hier behandelte axiale Gummimischungs-Differenzierung allein auf die beiden Caps zu beziehen.

Innerhalb der fahrzeugäußeren Rille 11c ist der Mittenbereich 12 eingezeichnet, innerhalb dessen sich die Grenze 10.3 zwischen den beiden axial geschichteten Laufstreifen 10.1 und 10.2 befindet; in dieser Schnittebene - bei Zickzackförmigkeit der Rille 11c schwankt die Lage des Mittenbereiches 12 von Schnittebene zu Schnittebene - liegt die Grenze 10.3 genau in der Mitte des Grundes der Rille 11c. Die Grenze 10.3 zwischen den beiden Laufstreifen 10.1 und 10.2 verläuft in diesem Beispiel exakt radial.

Figur 3 zeigt einen Querschnitt durch einen erfindungsgemäßen Fahrzeugreifen 7 mit einem axial ungeteilten Laufstreifen 10. Im Gegesatz zur Figur 2 ist hier ein sogenannter EOT-Aufbau dargestellt, wo der Laufstreifen schmaler als die breitesten Gürtellagen ausgeführt sind. Auf einem solchen Unterbau entfaltet die erfindungsgemäße Profilierung des Laufstreifens 10 besonders deutlich seine Vorteile. Zu einem solchen Unterbau sollte - wie hier dargestellt - eine solche Gestaltung der beiden Laufflächenränder 13 gewählt werden, daß sich im Querschnitt am Übergang in die Seitenwand 18 jeweils eine Kehle 17 ergibt, deren Kehlenradius r kleiner als 60 mm ist.

Figur 4 zeigt eine Draufsicht auf einen Umfangsabschnitt eines erfindungsgemäßen Fahrzeugreifens 7. Während in den drei Profilstegen 20 üblicher Breite Einschnitte 19 zur Gewährleistung einer hohen Bremsleistung angeordnet sind, ist der fahrzeugäußere, erfindungsgemäß besonders breite Profilsteg 12 frei von solchen Einschnitten und weist statt dessen im wesentlichen - in diesem Beispiel exakt - runde Negative 14 auf, die hier in drei zueinander phasenversetzten Spuren 15 angeordnet sind. Beide Ränder 13 und 16 des Profilsteges 12 sind zur Vermeidung von Kerbwirkungen frei von Unterbrechungen und verlaufen in Umfangsrichtung.

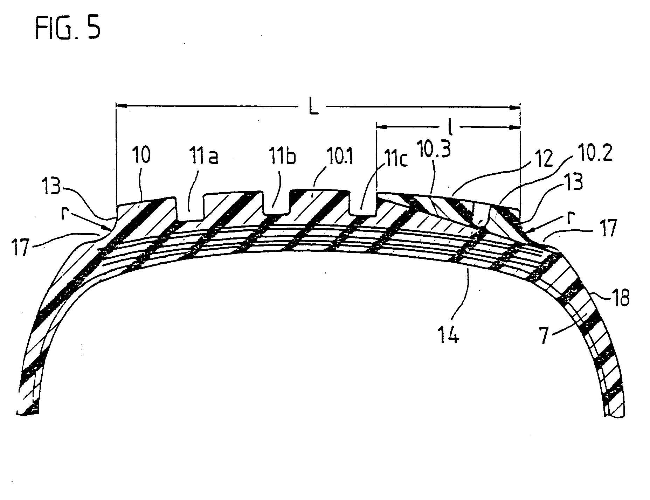

Figur 5 zeigt einen Querschnitt durch einen erfindungsgemäßen Fahrzeugreifen 7 mit einem diagonal geteilten Zweistoff-Laufstreifen. Oberhalb der Karkasse 8 aus Stahldraht-Cord befinden sich vier ebenfalls aus Stahldraht-Cord bestehende Gürtellagen 9 und darüber ein Laufstreifen 10. Die diagonale Teilung ermöglicht eine besonders genau mit der Belastungsdifferenzierung korrespondierende Werkstoffdifferenzierung. Die diagonale Werkstoffgrenze 10.3 durchsetzt den erfindungsgemäß besonders breiten fahrzeugäußeren Profilsteg 12, sodaß im Neuzustand des Reifens dieser Profilsteg 12 vollständig mit der besonders abriebbeständigen Mischung in Straßenkontakt kommt, wobei nach einem gewissen Abrieb dieser Effekt sich jedoch im Unterschied zur Ausführung nach Figur 2 mindert. Dies ist in dieser Ausführung gewollt, weil einige Versuchsergebnisse darauf hindeuten, daß das zu lösende Problem des Kantenabriebes sich über abnehmender Profiltiefe verringert; auf diese Weise soll eine Überkompensation vermieden werden.

Im übrigen entspricht diese Ausführung einschließlich aller zugehörigen Bezugszeichen der Ausführung in der Figur 2, insbesondere weist der fahrzeugäußere Streifen 10.2 höchstens 70 % des gemäß DIN 53516 zu messenden Abriebvolumens auf im Vergleich zum fahrzeuginneren Streifen 10.1.

Die in diesen vier Figuren gezeigten Reifen sind für Sattelauflieger bestimmt, insbesondere für die vordere und hintere Achse. Sie erhöhen dort besonders deutlich die Wirtschaftlichkeit durch eine verringerte Häufigkeit von Reifenwechselarbeiten.

## Patentansprüche

1. Fahrzeugluftreifen (7) mit einem symmetrischen Paket von Gürtellagen (9) auf einer symmetrischen Karkasse (8) mit im wesentlichen radialen Stahl- und/oder Aramid-Drahtverlauf und mit einer asymmetrischen Lauffläche (10) mit mindestens drei Längsrillen (11) einer Tiefe zwischen 12 und 18 mm, insbesondere zur Verwendung auf der vorderen und/oder hinteren Achse von ungelenkten Mehrachsaggregaten, wobei
a) axial außen ein besonders breiter Profilsteg (12) angeordnet ist, wobei die zwischen der fahrzeugäußeren Längsrille (11c) und dem fahrzeugäußeren Aufstandsflächenrand (13) auf halber Profiltiefe zu messende Breite (l) 25 % bis 40 % der Aufstandsflächenbreite (L) beträgt,
b) der axial äußere Profilsteg (12) frei ist von jeglichen Negativen, die eine Haupterstreckungsrichtung haben (also keine Längsrillen, keine Längseinschnitte, keine Querrillen, keine Quereinschnitte, keine Diagonalrillen, keine Diagonaleinschnitte, all dies auch nicht mit irgendeiner Wellung), **dadurch gekennzeichnet,** daß
c) in dem axial äußeren Profilsteg (12) Negative (14) angeordnet sind, die in der Draufsicht im wesentlichen rund sind, wobei bis zu vier Spuren (15) von Negativen (14) auf dem axial äußeren Profilsteg (12) angeordnet sind und jede Spur (15) zwischen 100 und 150 im wesentlichen runder Negative (14) enthält.

2. Fahrzeugluftreifen (7) nach Anspruch 1 dadurch gekennzeichnet, daß die gemäß Merkmal a) zu messende Breite (l) des fahrzeugäußeren, besonders breiten Profilsteges (12) 30 % bis 38 % der Aufstandsflächenbreite (L) beträgt.

3. Fahrzeugluftreifen (7) nach Anspruch 1 dadurch gekennzeichnet, daß sowohl der fahrzeugäußere Rand (13) des äußeren Profilsteges (12) als auch der andere Rand (16) des Profilsteges (12) unterbrechungsfrei sind und exakt in Umfangsrichtung verlaufen.

4. Fahrzeugluftreifen (7) nach Anspruch 1 dadurch gekennzeichnet, daß die Breite (B) zumindest der breitesten Gürtellage (9) um mindestens 10 % größer ist als die Breite (L) der Lauffläche (10) und der Übergang von den axialen Rändern (13) der Lauffläche (10) in die Seitenwand (18) als Kehle (17) gestaltet ist mit einem Kehlenradius (r) kleiner 60 mm.

5. Fahrzeugreifen (7) nach einem der vorangehenden Ansprüche dadurch gekennzeichnet, daß die Lauffläche (10) aus mindestens zwei hinsichtlich ihres Werkstoffes verschiedenen, axial nebeneinander angeordneten Streifen (10.1 und 10.2) zusammengesetzt ist, wobei der axial äußerste Streifen (10.2) gemäß DIN 53516 höchstens 70 % des Abriebvolumens zeigt wie der übrige Bereich (10.1) der Lauffläche.

6. Fahrzeugluftreifen (7) nach Anspruch 5 dadurch gekennzeichnet, daß die Grenze (10.3) zwischen den beiden verschieden abriebfesten Streifen (10.1 und 10.2) im wesentlichen radial verläuft und sich im Mittenbereich (12) der angrenzenden Längsrille (11 bzw. 11c) befindet, wobei dieser Mittenbereich (12) als der symmetrisch um die Rillenmittellinie liegende Bereich mit einer Breite von 60 % der Rillenweite (c) in halber Profiltiefe definiert ist.

7. Fahrzeugluftreifen (7) nach Anspruch 5 dadurch gekennzeichnet, daß die Grenze (10.3) zwischen den beiden verschieden abriebfesten Streifen (10.1 und 10.2) im Querschnitt diagonal verläuft.

## Claims

1. Pneumatic vehicle tyre (7), having a symmetrical bundle of belt plies (9) on a symmetrical carcase (8) having a substantially radial steel and/or aramide wire configuration and having an asymmetrical tread surface (10) with at least three longitudinal grooves (11) having a depth of between 12 mm and 18 mm, more especially for use on the front and/or rear axle of non-guided multiple-axle assemblies, wherein
a) a particularly wide profile web (12) is disposed axially externally, the width (l), which is to be measured at half the profile depth between the longitudinal groove (11c) on the outside of the vehicle and the contact surface edge (13) on the outside of the vehicle, being between 25 % and 40 % of the contact surface width (L), and
b) the axially outer profile web (12) is free of any negatives which have a main direction of extension (that is to say, no longitudinal grooves, no longitudinal incisions, no transverse grooves, no transverse incisions, no diagonal grooves, no diagonal incisions, all this not even being with any undulation),
characterised in that
c) negatives (14) are disposed in the axially outer profile web (12) and are substantially circular when viewed from above, up to four traces (15) of negatives (14) being disposed on the axially outer profile web (12), and each trace (15) containing between 100 and 150 substantially circular negatives (14).

2. Pneumatic vehicle tyre (7) according to claim 1, characterised in that the width (l) of the particularly wide profile web (12) on the outside of the vehicle, which width is to be measured in accordance with feature a), is between 30 % and 38 % of the contact surface width (L).

3. Pneumatic vehicle tyre (7) according to claim 1, characterized in that both the edge (13) of the outer profile web (12) on the outside of the vehicle and the other edge (16) of the profile web (12) are free of any interruptions and extend exactly in the circumferential direction.

4. Pneumatic vehicle tyre (7) according to claim 1, characterised in that the width (B), at least of the widest belt ply (9), is at least 10 % greater than the width (L) of the tread surface (10), and the transition region from the axial edges (13) of the tread surface (10) to the side wall (18) is configured as chamfer (17), having a radius (r) of less than 60 mm.

5. Pneumatic vehicle tyre (7) according to one of the preceding claims, characterized in that the tread face (10) comprises at least two strips (10.1 and 10.2), which are formed from different materials and are disposed axially adjacent each other, the axially outermost strip (10.2) according to DIN 53516 exhibiting a maximum wear volume of 70 % compared with the remaining region (10.1) of the tread surface.

6. Pneumatic vehicle tyre (7) according to claim 5, characterized in that the boundary (10.3) between the two differently wear-resistant strips (10.1 and 10.2) extends substantially radially and is situated in the central region (12) of the adjacent longitudinal groove (11 or 11c respectively), this central region (12) being defined as the region lying symmetrically about the centre line of the groove and having a width of 60 % of the groove width (c) at half the profile depth.

7. Pneumatic vehicle tyre (7) according to claim 5, characterized in that the boundary (10.3) between the two differently wear-resistant strips (10.1 and 10.2) extends diagonally when viewed in cross-section.

## Revendications

1. Bandage pneumatique pour véhicule (7) avec un paquet symétrique (9) sur une carcasse symétrique (8) avec un déroulement essentiellement radial des fils d'acier et/ou d'aramide et avec une surface de roulement asymétrique (10) comportant au moins trois rainures longitudinales (11) d'une profondeur comprise entre 2 et 10 mm, en particulier pour utilisation sur l'essieu avant et/ou arrière de trains roulants à plusieurs essieux non directionnels, dans lequel
a) On trouve disposée de façon axiale à l'extérieur une nervure de profil particulièrement large (12), la largeur (1) à mesurer à la moitié de l'épaisseur du profil entre la rainure longitudinale externe du véhicule (11c) et le bord de la surface d'appui externe du véhicule (13) s'élevant à 25 à 40% de la largeur de la surface d'appui (L),
b) La nervure de profil extérieure axiale (12) est dépourvue de toute partie négative ayant une direction d'extension principale (donc dépourvue de de rainures longitudinales, d'entailles longitudinales, de rainures transversales, d'entailles transversales, de rainures diagonales, d'entailles diagonales, tout cela sans non plus aucune ondulation), caractérisé en ce que
c) Dans la nervure de profil extérieure axiale (12) sont disposés des éléments négatifs qui, vus en plan, sont essentiellement ronds, où jusqu'à 4 empreintes (15) d'éléments négatifs (14) sons disposées sur la nervure de profil extérieur axiale (12) et chaque empreinte (15) contient entre 100 et 150 éléments négatifs essentiellement ronds.

2. Bandage pneumatique pour véhicule (7) selon la revendication 1, caractérisé en ce que la largeur (1) de la nervure de profil particulièrement large, externe, du véhicule (12) à mesurer s'élève à 30 à 38% de la largeur de la surface d'appui (L).

3. Bandage pneumatique pour véhicules (7) selon la revendication 1, caractérisé en ce que tant le bord externe du véhicule (13) de la nervure de profil externe (12) que l'autre bord (16) de la nervure de profil (12) sont dépourvus d'interruption et courent exactement dans la direction circonférentielle.

4. Bandage pneumatique pour véhicules (7) selon la revendication 1, caractérisé en ce que la largeur (B) de la plus large nappe radiale (9) dépasse d'au moins 10% la largeur (L) de la surface de roulement (10) et en ce que la transition des bords axiaux (13) de la surface de roulement (10) dans la paroi latérale (18) a une forme de gorge (17) avec un rayon (r) inférieur à 60 mm.

5. Pneu pour véhicules (7) selon l'une des revendications précédentes, caractérisé en ce que la surface de roulement (10) est composée de deux bandes (10.1 et 10.2) différentes, au moins par leurs matériaux, disposées axialement l'une à côté de l'autre, la bande axialement la plus externe (10.2) selon DIN 53516 présentant au plus 70% du volume d'usure par comparaison avec le reste de la zone (10.1) de la surface de roulement.

6. Bandage pneumatique pour véhicule (7) selon la revendication 5, caractérisé en ce que la limite (10.3) entre les deux bandes différentes résistant à l'usure (10.1 et 10.2) court de façon essentiellement radiale et se trouve dans la zone médiane (12) de la rainure longitudinale voisine (11 ou selon les cas 11c), cette zone médiane (12) étant définie comme la zone située symétriquement par rapport à la ligne médiane de la rainure avec une largeur de 60% de la largeur de la rainure (c) à la moitié de la profondeur du profil.

7. Bandage pneumatique pour véhicule (7) selon la revendication 5, caractérisé en ce que la limite (10.3) entre les deux bandes différentes résistant à l'usure (10.1 et 10.2) court en coupe de façon diagonale.
